(19) Europäisches Patentamt

European Patent Office

Office européen des brevets

(11) Veröffentlichungsnummer: **0 327 046 B1**

(12) # EUROPÄISCHE PATENTSCHRIFT

(45) Veröffentlichungstag der Patentschrift: **24.03.93**

(51) Int. Cl.⁵: **C04B 35/56**

(21) Anmeldenummer: **89101692.5**

(22) Anmeldetag: **01.02.89**

(54) **Verfahrensmethode zur Herstellung hochfester und hochdichter, polykristalliner Siliziumkarbid-Formkörper mit homogener Kohlenstoffverteilung durch kontrollierte Diffusion.**

(30) Priorität: **05.02.88 DE 3803382**
**02.12.88 DE 3840594**

(43) Veröffentlichungstag der Anmeldung:
**09.08.89 Patentblatt 89/32**

(45) Bekanntmachung des Hinweises auf die
Patenterteilung:
**24.03.93 Patentblatt 93/12**

(84) Benannte Vertragsstaaten:
**AT BE CH DE FR GB IT LI NL SE**

(56) Entgegenhaltungen:
**EP-A- 0 094 591**
**EP-A- 0 110 053**
**DE-A- 2 751 851**
**DE-A- 3 630 369**
**US-A- 4 041 117**

(73) Patentinhaber: **HOECHST AKTIENGESELL-
SCHAFT
Postfach 80 03 20
W-6230 Frankfurt am Main 80(DE)**

(72) Erfinder: **Hamminger, Rainer, Dr.
Friedrichstrasse 171
W-6800 Mannheim 24(DE)**
Erfinder: **Aldinger, Fritz, Dr.
Barbarossastrasse 44
W-6458 Rodenbach(DE)**

EP 0 327 046 B1

**Beschreibung**

Die Erfindung betrifft ein Verfahren zur Herstellung hochfester und hochdichter, polykristalliner Siliziumkarbid-Formkörper mit homogener Verteilung des als Desoxidationsmittel eingesetzten Kohlenstoffs durch gezielte Aktivierung von Diffusionsvorgängen.

Unter den nichtoxidischen Hochleistungskeramiken stellt dichtes Siliziumkarbid (SiC) einen besonders wichtigen und aussichtsreichen Werkstoff dar. Aufgrund der Kombination herausragender Stoffeigenschaften wie Härte und Verschleißfestigkeit, Hochtemperaturfestigkeit sowie Oxidations- und Korrosionsbeständigkeit ist für die nahe Zukunft ein hohes Einsatzpotential im Apparate- und Maschinenbau zu erwarten. Die Verdichtung von reinem SiC kann dabei aufgrund hoher kovalenter Bindungsanteile nur durch einen Drucksinterprozeß erfolgen.

Drucklos kann SiC unter Zusatz sinterfördernd wirkender Additive verdichtet werden. Üblich ist vor allem der Zusatz von B und dessen Verbindungen unter gleichzeitiger C-Zugabe (US 4 004 934, US 4 124 667, DE 2 751 851, DE 2 912 443, DE 2 809 278, DE 2 813 666, BE 842 623). Durch die Zusätze stellt sich ein günstiges Verhältnis der Korngrenzen- zur Oberflächenenergie und dadurch die Aktivierung des Sinterprozesses ein. Die Zugabe von C ist grundsätzlich erforderlich und dient der Reduktion der den SiC-Primärpulverteilchen anhaftenden $SiO_2$-Schichten. Der Zusatz von C soll dabei zu einer vollständigen Reduzierung von $SiO_2$ führen. Um eine vollständige Reduzierung zu garantieren, muß C in der Praxis überstöchiometrisch eingesetzt werden. Der C-Überschuß bildet im gesinterten Körper C-Einschlüsse. Die mechanischen Eigenschaften derart hergestellter Sinterkörper hängen dabei ganz entscheidend vom Grad der Homogenität der Gefügemorphologie und damit von der Homogenität der C-Einschlüsse ab. Besonders leistungsfähige SiC-Werkstoffe können so vor allem unter Zusatz sehr geringer Additivkonzentrationen hergestellt werden. Daraus leitet sich die Notwendigkeit ab, die erforderlichen Zusätze so homogen wie möglich einzubringen und zu verteilen. Dieser Homogenisierungsprozeß erfolgt heute durch Mahl- bzw. Mischmahlprozesse in unterschiedlich gearteten Anlagen, ist jedoch aufgrund der inhärenten Härte und Verschleißfestigkeit von SiC mit hohem Mahlkörperabrieb und/oder hohem Verfahrens- und Kostenaufwand verbunden. Vor allem die Einbringung von Mahlkörperabrieb, üblicherweise Fe und Stahl- bzw. Hartmetallbegleitelemente, wirkt sich sehr nachteilig auf die SiC-Produkteigenschaften aus. Abhilfe kann hier nur durch intensive Reinigungsschritte in Form aufwendiger Säure- und Temperaturbehandlung erfolgen (DE 3 243 570).

Die hier zugrundeliegende neue Verfahrensmethode ermöglicht die Herstellung hochfester und hochdichter, polykristalliner SiC-Formkörper mit optimierter, homogener C-Verteilung durch gezielte Aktivierung von Diffusionsvorgängen. Die neue Verfahrensmethode ist unabhängig davon, ob C in fester oder gelöster Form eingebracht wird. Die homogene C-Verteilung wird bei der neuen Verfahrensmethode unter Ausnutzung von Diffusionsvorgängen durch eine an diese Vorgänge angepaßte Temperatur-Atmosphärenbehandlung erzielt. Die bisherige Homogenisierung durch kostenintensive, zeitraubende und Verunreinigungen verursachende Mahl- bzw. Mischmahlprozesse kann dadurch entfallen. Stattdessen wird von einem auf einfache Weise durch kurzzeitiges Mischen, z.B. 20 min. in einem laborüblichen Dispergiergerät, und nach den bekannten keramischen Formgebungsverfahren hergestellten Grünkörper ausgegangen, der die Sinteradditive in inhomogener Verteilung enthält. Im weiteren wird dieser Grünkörper einer optimierten Temperatur-Atmosphärenbehandlung unterzogen und anschließend in einer Inertgasatmosphäre im Temperaturbereich von 1950 - 2200 °C drucklos gesintert und abgekühlt. Die neue Verfahrensmethode ist vor allem darauf abgestimmt, die bei unterschiedlicher Temperatur ablaufenden Korngrenzen-, Oberflächen- und Volumendiffusionsprozesse zu aktivieren. Die Korngrenzen (KG)- und Volumendiffusion (V) von C in polykristallinem SiC kann durch folgende Selbstdiffusionskoeffizienten (D) angegeben werden (M.H. Hon, R.F. Davis; J. Mat Sci. 14 (1979) 2411):

$$D_{KG} = (4,44 \pm 2,03) \times 10^7 \exp\left(\frac{-(5,84 \pm 0,09) \text{ eV/atom}}{k\ T}\right) cm^2/sec$$

$$D_{V} = (2,62 \pm 1,83) \times 10^8 \exp\left(\frac{-(8,72 \pm 0,14) \text{ eV/atom}}{k\ T}\right) cm^2/sec$$

2

Daraus ergeben sich in Abhängigkeit von der Temperatur deutlich höhere (Faktor $10^5$ - $10^6$) Werte für den Korngrenzentransport. Aufgrund des hohen Korngrenzenanteils in polykristallinem SiC stellt die Korngrenzendiffusion somit die dominierende Transportroute dar. Die desoxidierende Wirkung des C kommt dabei wegen der diffusionsgesteuerten Ausbildung dünner C-Schichten auf der Oberfläche der SiC-Primärpartikel zur Entfaltung. Begünstigt wird die Ausbildung dieser Reduktionsschichten durch den geringen Radius der C-Atome und die dadurch gegebene Möglichkeit der Korngrenzen- und Oberflächendiffusion. Der so durch Diffusionsvorgänge oberflächlich vorliegende C reagiert mit dem $SiO_2$ der SiC-Primärpartikel nach der vom CO-Partialdruck abhängigen Reaktion

$$3\ C\ (s)\ +\ SiO_2\ (s)\ \dashrightarrow\ SiC\ (s)\ +\ 2\ CO\ (g)$$

unter Bildung von sekundärem SiC. Im Vakuum ergibt sich damit unter Absenkung des CO-Partialdruckes eine Verlagerung des Reaktionsgleichgewichtes unter beschleunigter Bildung von sekundärem SiC. Darüber hinaus liegen im Vakuum noch wesentlich höhere Selbstdiffusionskoeffizienten als unter Normaldruck vor. Im Rahment eigener oberflächenanalytischer Untersuchungen wurde im Vakuum [$3 \bullet 10^{-10}$ MPa] ($3 \times 10^{-9}$ bar) bereits nach wenigen Minuten und bei Raumtemperatur eine um den Faktor 1,5 höhere C-Konzentration auf SiC-Partikeln beobachtet als unter sonst gleichen Bedingungen auf monokristallinem SiC. Die Diffusion der C-Atome ist demnach bereits bei niedrigen Temperaturen gegeben und wird durch weitere Energiezufuhr noch verstärkt.

Im Rahmen der neuen Verfahrensmethode wird durch die gezielte Aktivierung von Diffusionsprozessen eine besonders homogene C-Verteilung erreicht. Die dabei zugrundeliegenden Diffusionsprozesse hängen nicht nur von der Temperatur und dem Umgebungsdruck, sondern nach den Fick'schen Gesetzen auch von der Konzentration der diffundierenden Spezies und der Zeit ab. Die grundlegende Verbesserung der neuen Verfahrensmethode besteht darin, daß ausgehend von einem auf einfachste Weise hergestellten Grünkörper zur Homogenisierung des als Desoxidationsmittel dienenden C ein auf die Aktivierung der Diffusionsprozesse abgestimmtes Temperatur-Atmosphärenprogramm Anwendung findet. Durch das anliegende Vakuum wird dabei vor allem die Oberflächendiffusion von C verstärkt. Als ein Hauptvorteil der neuen Verfahrensmethode kann auf die bisher übliche, kosten-, zeit- und verunreinigungsintensive Homogenisierung der keramischen Rohmasse verzichtet werden. Durch Anwendung der neuen Verfahrensmethode können homogene, hochdichte und feinkörnige SiC-Werkstoffe hergestellt werden. Diese Werkstoffe zeichnen sich durch besonders gute Hochtemperatureigenschaften, insbesondere eine niedrige Oxidationsgeschwindigkeit (0-2,0 $\times$ $10^{-10}$ $g^2/cm^4 \bullet h$ in Sauerstoff bei 1400°C) sowie eine hohe Biegebruchfestigkeit bei hohen Temperaturen (440 MPa bei 1550°C) aus. Wegen der zwischenzeitlich erzeugten gleichmäßigen C-Schicht auf den SiC-Partikeln läßt sich eine besonders wirksame Desoxidation der $SiO_2$-Schicht erreichen. Dies äußert sich in einem sehr geringen Sauerstoffgehalt im Sinterkörper (<0,01 Gew.-%).

Bei dem erfindungsgemäßen Verfahren zur Herstellung hochfester und hochdichter, polykristalliner SiC-Formkörper mit homogener Verteilung des als Desoxidationsmittel eingesetzten Kohlenstoffs vermischt man ein SiC-Pulver mit einer spezifischen Oberfläche von mindestens 10 $m^2/g$, eine Kohlenstoff-Quelle und eine Quelle für ein Sinterhilfselement, formt diese Masse zu einem Grünkörper, überführt gegebenenfalls die Kohlenstoff-Quelle durch thermische Behandlung des Grünkörpers in elementaren Kohlenstoff, sintert den Grünkörper mit einem Gehalt an elementarem Kohlenstoff in einer Inertgasatmosphäre im Temperaturbereich von 1950 - 2200°C während mindestens 15 Minuten drucklos und kühlt ihn anschließend ab. Das Verfahren ist dadurch gekennzeichnet, daß man zur homogenen Verteilung des Kohlenstoffs den Grünkörper vor dem Sintern in einem Vakuum von $10^{-3}$ MPa ($10^{-2}$ bar) oder besser aufheizt, und dabei eine Aufheizgeschwindigkeit wählt, die 15 K/min nicht überschreitet und dann bei einer Temperatur, die die in der Tabelle 1 angegebene Mindesttemperatur erreicht oder überschreitet, aber nicht höher liegt als 1600°C, behandelt, und man die Temperatur/Vakuumbehandlung solange fortsetzt, bis alle SiC-Partikel im Grünkörper mit einer gleichmäßigen C-Schicht bedeckt sind (erkennbar durch hochauflösende AUGER Elektronenspektroskopie).

## Tabelle 1  (Homogenisierungsparameter)

| Vakuum | Mindest-Temperatur | minimale Haltezeit | Temperatur-bereich | max. Aufheiz-Geschwindigkeit |
|---|---|---|---|---|
| $10^{-9}$ bar | RT | 6 min. | Raumtemp. | – |
| $10^{-8}$ bar | RT | 20 min. | " | – |
| $10^{-7}$ bar | RT | 30 min. | " (=RT) | – |
| $10^{-6}$ bar | 400°C | 50 min. | RT–400°C | 15 K/min |
| $10^{-5}$ bar | 700°C | 90 min. | RT–700°C | " |
| $10^{-4}$ bar | 850°C | 150 min. | RT–850°C | " |
| $10^{-3}$ bar | 1150°C | 180 min. | RT–1150°C | " |
| $10^{-2}$ bar | 1400°C | 240 min. | RT–1400°C | " |

Um die Gleichmäßigkeit der sich auf den SiC-Partikeln bildenden C-Schicht feststellen zu können, wird die hochortsauflösende AUGER-Elektronenspektroskopie (Ch. C. Chang; Surf. Sci. 25 (1971) 53; D.F. Stein, A. Joshi; Ann. Rev. Mat. Sci. 11 (1981) 485; R. Hamminger, G. Grathwohl, F. Thümmler; J. Mat. Sci. 18 (1983) 3154; R. Hamminger, G. Grathwohl, F. Thümmler; Int. J. High Technology Ceramics 3 (1987) 129), ein oberflächensensitives Untersuchungsverfahren, herangezogen. Mit Hilfe der AUGER-Methode werden an im Ultrahochvakuum erzeugten Bruchflächen willkürlich mehrere Punkte ausgewählt und unter hoher Ortsauflösung (ca. 50 nm) analysiert.

Als Maß für die gleichmäßige Ausbildung der C-Schicht auf den SiC-Partikeln gilt der Prozentsatz der Untersuchungspunkte an denen der peak für C (bei 272 eV) der intensivste ist.

Eine "gleichmäßige C-Schicht" im Sinne des erfindungsgemäßen Verfahrens liegt vor, wenn bei mindestens 99 % aller Analysenpunkte der peak $I_C$ (272 eV) der intensivste ist.

Aus der DE-OS 36 30 369 ist ein Verfahren bekannt, bei dem Siliziumkarbid-Sinterkörper unter Verwendung kohlenstoffhaltiger Sauerstoffänger hergestellt werden. Dabei werden die Formlinge bei einer Temperatur von 1300 - 1550°C unter einem Vakuum von nicht mehr als 1,33 x $10^{-5}$ Pa behandelt, bis die Reaktion von $SiO_2$ und C beendet ist. In diesem Temperaturbereich wird die Temperatur nur mit einer Geschwindigkeit von maximal 10°C/min. erhöht. Zwar kann das Aufheizen auf 1300°C unter Vakuum erfolgen. Es fehlt jedoch ein Hinweis, daß auch hier die Güte des Vakuums kritisch ist und mit der endgültigen Behandlungstemperatur verknüpft ist. Eigene Versuche haben gezeigt, daß ein Aufheizen unter Vakuum nur in einem engen Temperaturbereich wie in der DE-OS 36 30 369 zu Endprodukten führt, die schlechte Hochtemperatureigenschaften (insbesondere schlechte Oxidationsbeständigkeit) und insgesamt eine unbefriedigende Gefügemorphologie (Poren, Einschlüsse) aufweisen.

Das Verfahren der vorliegenden Erfindung wird vorzugsweise so geführt, daß die Ansatzmasse 0,1 bis 10,0 Gew.-% Kohlenstoff, gerechnet als elementarer Kohlenstoff, enthält. Weiterhin ist bevorzugt, daß die keramische Masse 0,01 bis 5,00 Gew.-% Bor (gerechnet als Element), besonders bevorzugt 0,1 bis 3,0 Gew.-% Bor, und/oder 0,1 bis 10,0 Gew.-% Al, Be oder seltene Erdelemente und/oder deren Verbindungen und/oder ein Element aus der Gruppe Yttrium, Hafnium, Scandium, Niobium oder Lanthan als Sinterhilfsmittel enthält

In einer weiteren bevorzugten Ausgestaltung des erfindungsgemäßen Verfahrens wird beim Sintern eine strömende Edelgasatmosphäre eingesetzt. Die Formkörper werden insbesondere über eine Zeitdauer im Bereich von 15 bis 120 min, vorzugsweise im Bereich von 30 bis 60 min, bei Sintertemperatur gehalten. Nach dem Sintern können die Sinterkörper zusätzlich einer heißisostatischen Nachbehandlung ausgesetzt werden.

Im folgenden wird die Erfindung anhand von Beispielen näher erläutert.

**Beispiel 1**

Als Ausgangsmaterial wurde handelsübliches α-Siliziumkarbidpulver der spezifischen. Oberfläche 12 und 15 m²/g und einer mittleren Korngröße von ca. 0,6 μm verwendet. Das α-Siliziumkarbidpulver wurde mit 0,4 Gew.-% amorphem Bor und 2,5 Gew.-% C in Form eines in Isopropanol gelösten, pyrolysierbaren Harzes (C-Gehalt nach Verkoken 45 Gew -%) in einem laborüblichen Dispergiergerät (Ultra-Turrax, Hersteller: IKA, Maschinenbau Janke & Kunkel, Staufen, DE) 20 min. vermischt. Nach Abziehen des Lösungsmittels wurde die Mischung getrocknet, gesiebt und isostatisch mit einem Druck von 300 MPa zu Grünkörpern verpreßt. Als Preßhilfsmittel wurde 1,0 Gew.-% Ölsäure verwendet. Der Homogenisierungsprozeß wurde unter den in Tabelle 2 angegebenen Parametern durchgeführt.

Tabelle 2

| Homogenisierungsparameter | | |
|---|---|---|
| Temp.bereich | Aufheizgeschwindigkeit | Atmosphäre |
| RT-1250 °C | 0,5 K/min Haltezeit 200 min | Vakuum (3•$10^{-4}$ bar) 3•$10^{-5}$ Mpa |
| 1250 °C - RT | Abkühlen mit 15 K/min | Vakuum (< $10^{-3}$ bar) <$10^{-4}$ MPa |

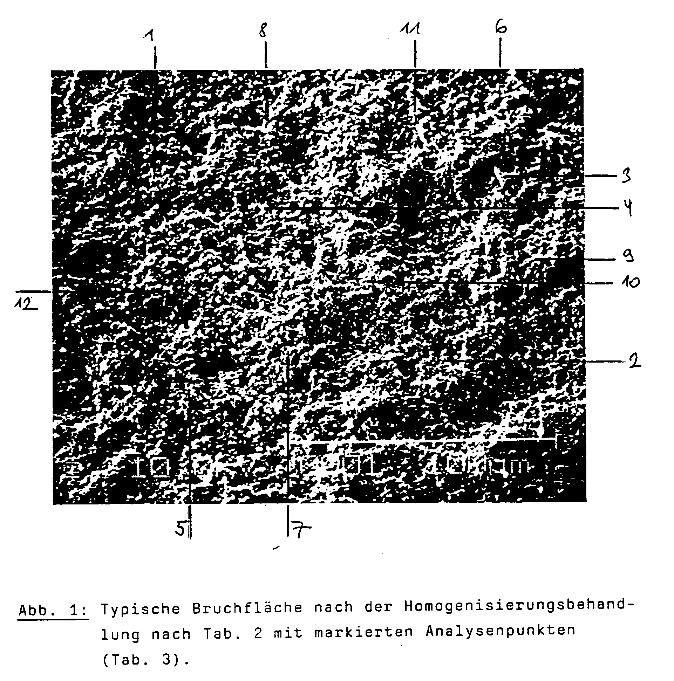

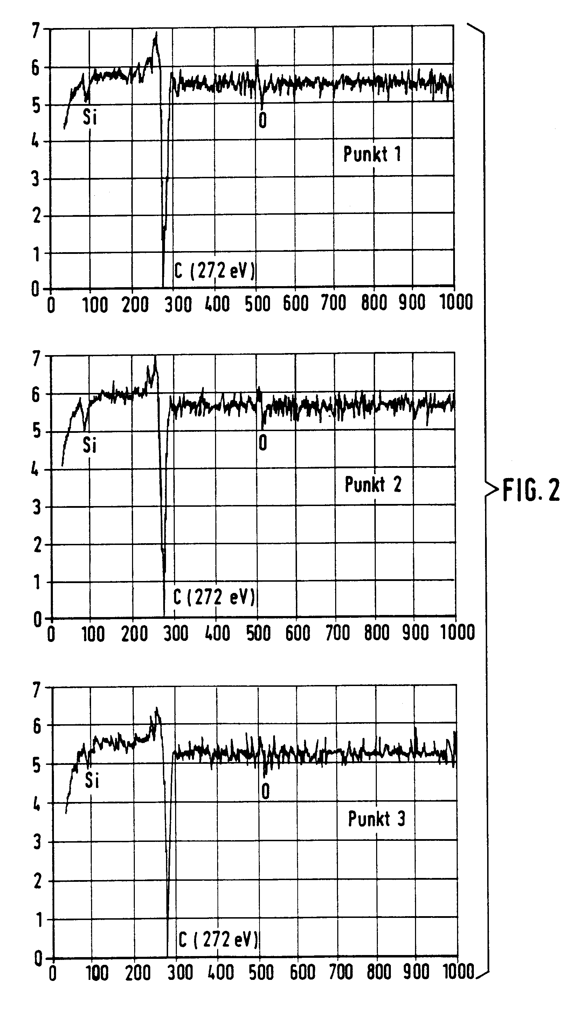

Um die Gleichmäßigkeit der sich auf den SiC-Partikeln bildenen C-Schicht feststellen zu können, wurde die hochortsauflösende AUGER-Elektronenspektroskopie herangezogen. Mit Hilfe der AUGER-Methode wurden an im Ultrahochvakuum erzeugten Bruchflächen der nach Tabelle 2 hergestellten d.h. homogenisierten Proben willkürlich Punkte ausgewählt und unter hoher Ortsauflösung (ca. 50 nm) analysiert. In Abb. 1 ist eine typische, unter UHV-Bedingungen (2,6 x $10^{-8}$ Pa) erzeugte Bruchfläche einer solchen Probe dargestellt. Die analysierten Punkte sind mit den Ziffern 1 - 12 gekennzeichnet. Die vollständigen AUGER-Spektren für die Pinkte 1 - 3 sind beispielhaft in Abb. 2 dargestellt.

In den analysierten Punkten (P1 - P12) war stets die Intensität des peaks für C größer als die der peaks für Si und O. Dies deutet auf eine Beschichtung der SiC-Partikel mit C. Die gleichzeitig nachgewiesene Sauerstoff-Konzentration deutet auf noch nicht stattgefundene Desoxidation des $SiO_2$ hin. Als Maß für die gleichmäßige Ausbildung der C-Schicht auf den SiC-Partikeln ist in Tabelle 3 ein Vergleich der Intensitätsverhältnisse

$$\frac{I_C\ (272\ eV)}{I_c max.\ (272\ eV)}$$

dargestellt,
wobei $I_c$max die Intensität von reinem Kohlenstoff (gemessen an Graphit) bedeutet.

**Tabelle 3** AUGER-Mehrpunktanalyse zur Gleichmäßigkeit der C-Schicht

| Analysenpunkt | $\dfrac{I_C \ (272 \ eV)}{I_c \ max. \ (272 \ eV)}$ (%) |
|---|---|
| P 1 | 100 |
| P 2 | 100 |
| P 3 | 96 |
| P 4 | 100 |
| P 5 | 91 |
| P 6 | 100 |
| P 7 | 100 |
| P 8 | 100 |
| P 9 | 97 |
| P 10 | 100 |
| P 11 | 99 |
| P 12 | 100 |

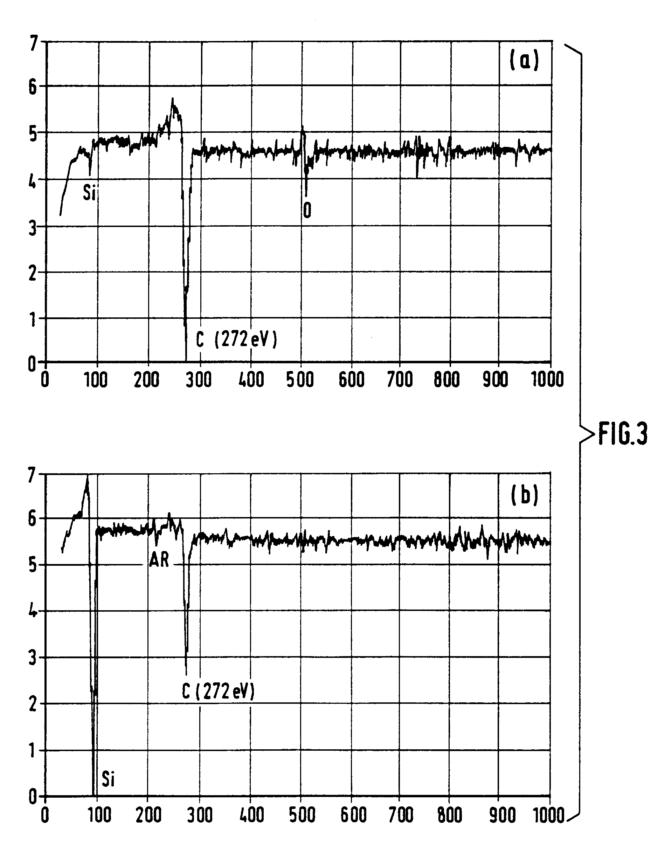

Die Dickenbestimmung der homogenen C-Schicht auf den SiC-Partikeln erfolgte im AUGER-System unter Ionenabtrag. Typische AUGER-Spektren von Bruchflächen im Zustand der Homogenisierungsbehandlung (a) und nach Abtrag von 10 nm (b) sind in Fig. 3 dargestellt. Aus der Änderung der Linienintensitäten ist zu erkennen, daß hier die C-Schicht ca. 10 nm dick war.

Nach dem Homogenisierungsprozeß wurden die Proben unter den in Tabelle 4 angegebenen Parametern gesintert.

Tabelle 4

| Sinterparameter | | |
|---|---|---|
| Temperaturbereich | Aufheizgeschwindigkeit | Atmosphäre |
| RT-1250 °C | 20 K/min | Vakuum (< $10^{-3}$ bar) $10^{-4}$ MPa |
| 1250 - 2130 °C | 20 K/min | Ar > 20 l/h |
| 2130 °C | Haltezeit: 60 min | Ar > 20 l/h |
| 2130 °C - RT | 15 K/min | Ar > 20 l/h |

Die so erhaltenen Sinterkörper weisen eine Dichte von 98,0 % der theoretischen Dichte auf und sind durch ein homogen-feinkörniges Gefüge der Kristallitgröße 2 - 5 $\mu$m gekennzeichnet. Die chemische Analyse der Sinterkörper ergibt einen Sauerstoffgehalt von 0,008 Gew.-%. Die Menge der metallischen Verunreinigungen ist < 0,01 Gew.-%. Freier C liegt in einer Konzentration < 0,2 Gew.-% vor. Das Sinterhilfselement B liegt in einer Konzentration von 0,14 Gew.-% vor. Die 4-Punkt-Biegebruchfestigkeit (Probekörper: 4,5 x 3,5 x 45 mm) bei Raumtemperatur des so erhaltenen Werkstoffs liegt bei 440 MPa. Aufgrund der niedrigen Oxidationsgeschwindigkeit von 1,9 x $10^{-10}$ $g^2/cm^4 \cdot h$ wird diese Festigkeit bis zu einer Temperatur von 1550 °C beibehalten.

**Beispiel 2**

Die Herstellung von Grünkörpern erfolgte nach Beispiel 1. Der diffusionsgesteuerte Homogenisierungsprozeß und der eigentliche Sinterprozeß wurden zu einem einzigen Verfahrensschritt zusammengefaßt. Die Grünkörper wurden unter den in Tabelle 5 angegebenen Parametern behandelt.

Tabelle 5

| Homogenisierungs- und Sinterparameter | | |
|---|---|---|
| Temperaturbereich | Aufheizgeschwindigkeit | Atmosphäre |
| RT-1250 °C | 0,5 K/min | Vakuum von |
| 1250°C | Haltezeit 200 min | $(3 \cdot 10^{-4}$ bar) $3 \cdot 10^{-5}$ MPa |
| 1250 - 2130°C | 20 K/min | Ar > 20 l/h |
| 2130°C | Haltezeit 60 min | Ar > 20 l/h |
| 2130°C - RT | 15 K/min | Ar > 20 l/h |

Die nach Beispiel 2 durch kombinierten Homogenisierungs- und Sinterprozeß erhaltenen Formkörper zeichnen sich durch Eigenschaften aus, wie sie Werkstoffe gemäß Beispiel 1 aufweisen.

**Beispiel 3**

Als Rohstoffe wurden Siliziumkarbidpulver und B wie in Beispiel 1 verwendet. Die C-Komponente wurde in fester Form als Graphit oder Ruß eingesetzt. Die Konzentrationsbereiche von B und C blieben unverändert, die Vermischung des Ansatzes erfolgte in Wasser. Die so unter Zusatz von festem C erhaltenen Grünkörper wurden unter den Homogenisierungs-und Sinterbedingungen wie in Tabelle 5 behandelt. Die dabei erhaltenen Sinterkörper weisen Dichten zwischen 97,3 und 97,8 % der theoretischen Dichte auf. Die sonstigen Eigenschaften entsprechend denen von Werkstoffen wie sie nach Beispiel 1 erhalten wurden.

**Beispiel 4**

Als Ausgangsmaterial wurde handelsübliches $\beta$-Siliziumkarbidpulver der spezifischen Oberfläche 12 m²/g und mittleren Korngröße ca 0,6 $\mu$m verwendet. Als Zusatzstoffe wurden amorphes B und C eingesetzt. Verwendet wurde als C-Quelle das Harz von Beispiel 1 in gelöster Form. Gleiche Ergebnisse wurden bei Verwendung von Ruß oder Graphit erzielt. Die Vermischung der Komponenten und Herstellung der Grünkörper erfolgte wie in den vorangegangenen Beispielen. Um der inhärenten $\beta$-$\alpha$-Phasentransformation und dem damit verbundenen Kornwachstum zu begegnen, wurden die Grünkörper nach Tabelle 6 unter erniedrigter Endtemperatur behandelt.

Tabelle 6

| Homogenisierungs- und Sinterparameter | | |
|---|---|---|
| Temperaturbereich | Aufheizgeschwindigkeit | Atmosphäre |
| RT-1250 °C | 0,5 K/min | Vakuum von |
| 1250°C | Haltezeit 200 min | $(3 \cdot 10^{-4}$ bar) $3 \cdot 10^{-5}$ MPa |
| 1250 - 2050°C | 20 K/min | Ar > 20 l/h |
| 2050°C | Haltezeit 60 min | Ar > 20 l/h |
| 2050°C - RT | 15 K/min | Ar > 20 l/h |

Die so erhaltenen Sinterkörper bestehen aus $\beta$-SiC und weisen eine Dichte von 97,2 % der theoretischen Dichte auf. Die Kristallitgrößen betragen 2 bis 7 $\mu$m. Die chemische Analyse der Sinterkörper ergibt einen Sauerstoffgehalt von 0,009 Gew.-%. Die Menge der metallischen Verunreinigungen ist <0,01 Gew.-%. Freier C liegt in einer Konzentration <0,25 Gew.-% vor. Das Sinterhilfsmittel B liegt in einer Konzentration von 0,12 Gew.-% vor. Die 4-Punkt-Biegebruchfestigkeiten liegen bei Raumtemperatur zwischen 320 und 360 MPa und werden aufgrund der niedrigen Oxidationsgeschwindigkeit von 1,8 x $10^{-10}$ $g^2/cm^4 \cdot h$ bis zu einer Temperatur von 1550°C beibehalten.

**Beispiel 5**

$\alpha$- oder $\beta$-Siliziumkarbidpulver hoher spezifischer Oberfläche (10 - 25 $m^2/g$) und submikrofeiner Teilchengröße (<1 $\mu m$) wurde mit einem der bekannten Sinterhilfsmittel, wie z.B. B, Al, Be oder Seltenen Erden, unter gleichzeitiger C-Zugabe in fester oder gelöster Form im Labor-Dispergiergerät 20 min vermischt. Nach Herstellen entsprechender Grünkörper wurden diese nach den in Tabelle 2 und 4, 5 oder 6 angegebenen Parametern behandelt. In jedem Fall wurden dabei feinkörnig-homogene Sinterkörper mit einem Sauerstoffgehalt unter 0,01 Gew.-% und hoher Dichte (>95 % der theoretischen Dichte) erhalten.

**Patentansprüche**

1. Verfahren zur Herstellung hochfester und hochdichter, polykristalliner SiC-Formkörper mit homogener Verteilung des als Desoxidationsmittel eingesetzten Kohlenstoffs, wobei man ein SiC-Pulver mit einer spezifischen Oberfläche von mindestens 10 $m^2/g$, eine Kohlenstoff-Quelle und eine Quelle für ein Sinterhilfselement vermischt, und diese Masse zu einem Grünkörper formt, man gegebenenfalls die Kohlenstoff-Quelle durch thermische Behandlung des Grünkörpers in elementaren Kohlenstoff überführt, den Grünkörper mit einem Gehalt an elementarem Kohlenstoff in einer Inertgasatmosphäre im Temperaturbereich von 1950 - 2200°C während mindestens 15 Minuten drucklos sintert und ihn anschließend abkühlt, dadurch gekennzeichnet, daß man zur homogenen Verteilung des Kohlenstoffs den Grünkörper vor dem Sintern in einem Vakuum von $10^{-3}$ MPa ($10^{-2}$ bar) oder besser aufheizt, und dabei eine Aufheizgeschwindigkeit wählt, die 15 K/min nicht überschreitet und dann bei einer Temperatur, die die in der Tabelle angegebene Mindesttemperatur erreicht oder überschreitet, aber nicht höher liegt als 1600°C, behandelt, und man die Temperatur/Vakuumbehandlung solange fortsetzt, bis alle SiC-Partikel im Grünkörper mit einer gleichmäßigen C-Schicht bedeckt sind (erkennbar durch hochauflösende AUGER Elektronenspektroskopie).

| Vakuum | Mindest-Temperatur | minimale Haltezeit |
|---|---|---|
| $10^{-9}$ bar | RT | 6 min. |
| $10^{-8}$ bar | RT | 20 min. |
| $10^{-7}$ bar | RT | 30 min. |
| $10^{-6}$ bar | 400°C | 50 min. |
| $10^{-5}$ bar | 700°C | 90 min. |
| $10^{-4}$ bar | 850°C | 150 min. |
| $10^{-3}$ bar | 1150°C | 180 min. |
| $10^{-2}$ bar | 1400°C | 240 min. |

2. Verfahren nach Anspruch 1, dadurch gekennzeichnet, daß die Homogenisierung und Sinterung in einem einzigen Verfahrensschritt durchgeführt werden.

3. Verfahren nach Anspruch 1, dadurch gekennzeichnet, daß die Ansatzmasse 0,1 - 10,0 Gew.-% Kohlenstoff (gerechnet als elementarer Kohlenstoff) enthält.

4. Verfahren nach Anspruch 1, dadurch gekennzeichnet, daß der als Desoxidationsmittel dienende Kohlenstoff als Graphit, Ruß oder organische Verbindung eingesetzt wird.

5. Verfahren nach Anspruch 1, dadurch gekennzeichnet, daß die keramische Masse (gerechnet als Element) 0,01 - 5,00 Gew.-% B, vorzugsweise 0,1 - 3,0 Gew.-% B, und/oder 0,1 - 10,0 Gew.-% Al, Be, Seltene Erdelemente und/oder deren Verbindungen und/oder ein Element ausgewählt aus der Gruppe Yttrium, Hafnium, Scandium, Niobium, Lanthan als Sinterhilfselemente enthält.

6. Verfahren nach Anspruch 1, dadurch gekennzeichnet, daß die Ausgangsmaterialien nicht vermahlen werden.

**7.** Verfahren nach Anspruch 1, dadurch gekennzeichnet, daß nach der Homogenisierung des Kohlenstoffs beim Sintern ein Edelgas als Inertgas eingesetzt wird.

**8.** Verfahren nach Anspruch 1, dadurch gekennzeichnet, daß beim Sintern eine strömende Edelgasatmosphäre eingesetzt wird.

**9.** Verfahren nach Anspruch 1, dadurch gekennzeichnet, daß man die Formkörper während 15 bis 120 min., vorzugsweise während 30 bis 60 min., bei Sintertemperatur hält.

**10.** Verfahren nach Anspruch 1, dadurch gekennzeichnet, daß daraus resultierende Sinterkörper einer heißisostatischen Nachbehandlung ausgesetzt werden.

**11.** Verfahren nach Anspruch 1 und 2, dadurch gekennzeichnet, daß die Sinterkörper nicht mehr als 0,01 Gew.-% Sauerstoff enthalten.

**Claims**

**1.** A process for preparing shaped polycrystalline SiC articles of high strength and high density having a homogeneous distribution of the carbon used as deoxidizing agent, in which process a SiC powder having a specific surface area of at least 10 $m^2/g$, a carbon source and a source for a sintering auxiliary element are mixed and this composition is shaped to give a green compact, the carbon source is, if appropriate, converted into elemental carbon by heat treatment of the green compact, and the green compact containing elemental carbon is sintered, unpressurised, in an inert gas atmosphere in the temperature range from 1950 - 2200°C for at least 15 minutes and is then cooled, wherein, in order to achieve homogeneous distribution of the carbon, the green compact is heated, before sintering, in a vacuum of $10^{-3}$ MP ($10^{-2}$ bar) or more and for this operation a heating rate is chosen which does not exceed 15 K/min, and is then treated at a temperature which reaches or exceeds the minimum temperature indicated in the table, but is not higher than 1600°C, and the temperature/vacuum treatment is continued until all SiC particles in the green compact are covered with a uniform layer of carbon (detectable by high-resolution AUGER electron spectroscopy).

| Vacuum | Minimum temperature | Minimum holding time |
|---|---|---|
| $10^{-9}$ bar | RT | 6 min. |
| $10^{-8}$ bar | RT | 20 min. |
| $10^{-7}$ bar | RT | 30 min. |
| $10^{-6}$ bar | 400°C | 50 min. |
| $10^{-5}$ bar | 700°C | 90 min. |
| $10^{-4}$ bar | 850°C | 150 min. |
| $10^{-3}$ bar | 1150°C | 180 min. |
| $10^{-2}$ bar | 1400°C | 240 min. |

**2.** The process as claimed in claim 1, wherein the homogenization and sintering are carried out in a single process step.

**3.** The process as claimed in claim 1, wherein the batch composition comprises 0.1 - 10.0 % by weight of carbon (calculated as elemental carbon).

**4.** The process as claimed in claim 1, wherein the carbon serving as deoxidizing agent is used in the form of graphite, carbon black or an organic compound.

**5.** The process as claimed in claim 1, wherein the ceramic composition comprises (calculated as element) 0.01 - 5.00 % by weight of B, preferably 0.1 - 3.0 % by weight of B, and/or 0.1 - 10.0 % by weight of Al, Be, rare earth elements and/or their compounds and/or an element selected from the group yttrium, hafnium, scandium, niobium and lanthanum, as sintering auxiliary elements.

**6.** The process as claimed in claim 1, wherein the starting materials are not ground.

**7.** The process as claimed in claim 1, wherein, after the homogenization of the carbon, a noble gas is used as inert gas during sintering.

**8.** The process as claimed in claim 1, wherein a flowing noble gas atmosphere is used during sintering.

**9.** The process as claimed in claim 1, wherein the shaped articles are kept at sintering temperature for 15 to 120 min, preferably for 30 to 60 min.

**10.** The process as claimed in claim 1, wherein sintered articles resulting therefrom are subjected to a hot-isostatic after treatment.

**11.** The process as claimed in claim 1 and 2, wherein the sintered articles comprise no more than 0.01 % by weight of oxygen.

**Revendications**

**1.** Procédé pour fabriquer des objets moulés en SiC polycristallin, présentant une résistance mécanique et une densité élevées, ainsi qu'une répartition homogène du carbone utilisé comme agent de désoxydation, dans lequel on mélange une poudre de SiC, ayant une aire spécifique d'au moins 10 $m^2$/g, une source de carbone et une source d'un élément auxiliaire de frittage, on façonne cette masse pour obtenir un comprimé cru, on convertit éventuellement la source de carbone, par traitement thermique du comprimé, en carbone élémentaire, on fritte le comprimé, contenant du carbone élémentaire, dans une atmosphère inerte sur un intervalle de températures de 1950-2200°C pendant au moins 15 minutes sans pression, puis on refroidit, caractérisé en ce que, pour assurer une répartition homogène du carbone, on chauffe le comprimé, avant le frittage, dans un vide de $10^{-3}$ MPa ($10^{-2}$ bar) ou plus, et on choisit pour cela une vitesse de montée en température ne dépassant pas 15 K/min, puis on traite à une température qui atteint ou dépasse la température minimale indiquée sur le Tableau 1, mais qui n'est pas supérieure à 1600°C, et on poursuit ce traitement à haute température/sous vide jusqu'à ce que toutes les particules de SiC se trouvant dans le comprimé soient recouvertes d'une couche homogène de C (ce que l'on peut reconnaître par une spectroscopie électronique AUGER à haut pouvoir de résolution).

| Vide (bar) | Température minimale T.A. = Température ambiante | Temps de maintien minimal |
|---|---|---|
| $10^{-9}$ | T.A. | 6 min |
| $10^{-8}$ | T.A. | 20 min |
| $10^{-7}$ | T.A. | 30 min |
| $10^{-6}$ | 400°C | 50 min |
| $10^{-5}$ | 700°C | 90 min |
| $10^{-4}$ | 850°C | 150 min |
| $10^{-3}$ | 1150 | 180 min |
| $10^{-2}$ | 1400 | 240 min |

**2.** Procédé selon la revendication 1, caractérisé en ce que l'homogénéisation et le frittage sont mis en oeuvre au cours d'une étape unique.

**3.** Procédé selon la revendication 1, caractérisé en ce que la masse réactionnelle contient de 0,1-10,0 % en poids de carbone élémentaire.

**4.** Procédé selon la revendication 1, caractérisé en ce qu'on utilise le carbone servant d'agent de désoxydation sous forme de graphite, de noir de carbone ou d'un composé organique.

**5.** Procédé selon la revendication 1, caractérisé en ce que la masse céramique contient, les pourcentages étant calculés sous forme élémentaire, 0,01-5,00 et de préférence 0,1-3,0 % en poids de B et/ou 0,1-10,0 % en poids de Al, de Be, d'éléments des terres rares et/ou de leurs dérivés et/ ou d'un élément choisi parmi l'ensemble comprenant l'yttrium, le hafnium, le scandium, le niobium, le lanthane, en tant qu'éléments auxiliaires de frittage.

**6.** Procédé selon la revendication 1, caractérisé en ce que les matières de départ ne sont pas broyées.

**7.** Procédé selon la revendication 1, caractérisé en ce que, après homogénéisation du carbone, on utilise lors du frittage un gaz rare en tant que gaz inerte.

**8.** Procédé selon la revendication 1, caractérisé en ce qu on utilise lors du frittage un courant d'un gaz rare.

**9.** Procédé selon la revendication 1, caractérisé en ce que l'objet moulé se maintient à la température de frittage pendant 15 à 120 min et de préférence pendant 30 à 60 min.

**10.** Procédé selon la revendication 1, caractérisé en ce que les objets frittés qui en résultent sont exposés à un traitement ultérieur isostatique à chaud.

**11.** Procédé selon la revendication 1 ou 2, caractérisé en ce que les objets frittés ne contiennent pas plus de 0,01 % en poids d'oxygène.

Abb. 1: Typische Bruchfläche nach der Homogenisierungsbehandlung nach Tab. 2 mit markierten Analysenpunkten
(Tab. 3).

FIG. 2

FIG.3